# EUROPEAN PATENT SPECIFICATION

(11) **EP 4 372 321 B1**
(45) Date of publication and mention of the grant of the patent: **09.12.2026**
(21) Application number: 22841865.3
(22) Date of filing: 16.06.2022
(51) Int. Cl.: G01D 3/02, G01D 5/14, H02P 6/16

(54) **POSITION DETECTION DEVICE AND IMAGING DEVICE**
POSITIONSERKENNUNGSVORRICHTUNG UND BILDGEBUNGSVORRICHTUNG
DISPOSITIF DE DÉTECTION DE POSITION ET DISPOSITIF D'IMAGERIE

(30) Priority: 14.07.2021 JP 2021116057
(43) Date of publication of application: 22.05.2024
(73) Proprietor: Panasonic Intellectual Property Management Co., Ltd., Osaka-shi, Osaka 540-6207 (JP)
(72) Inventor: YOSHINO, Kazuki, Kadoma-shi, Osaka 571-0057 (JP); YAMAZAKI, Tatsuya, Kadoma-shi, Osaka 571-0057 (JP)
(74) Representative: Grünecker Patent- und Rechtsanwälte PartG mbB
(86) International application number: PCT/JP2022/024178
(87) International publication number: WO 2023/286521

(56) References cited:
- CN-A- 110 932 483
- JP-A- 2003 254 785
- JP-A- 2009 036 760
- JP-A- 2011 047 735
- JP-A- 2011 047 735
- JP-A- 2011 149 724
- JP-A- 2012 132 805
- JP-A- 2016 080 547
- JP-A- 2016 080 547
- JP-A- 2018 055 096
- JP-A- 2018 055 096
- JP-B2- 5 332 767

## Description

### TECHNICAL FIELD

The present disclosure relates to a position detection device and an imaging device including the position detection device.

### BACKGROUND ART

In the related art, a position detection device that detects positions of a camera in a tilt direction and a pan direction has been known. As an example of this type of position detection device, PTL 1 discloses a position detection device including a motor that rotates a drive target and a magnetic sensor that detects a position of the motor in a rotation direction. In this position detection device, a magnetized portion magnetized along the rotation direction of the motor is detected by the magnetic sensor, and thus, the position of the motor in the rotation direction is detected.

### Citation List

### Patent Literature

PTL 1: Unexamined Japanese Patent Publication No. 2009-36760
Publication patent application JP 2011 047735 A relates to a rotational angle detecting device. A rotor rotational angle estimating section estimates a rotor angle. A first amplification correction section corrects the amplitude of a first output signal V1 on the basis of the estimated value of a rotor angle and the maximum and minimum values of the first output signal V1 for each magnetic pole pair that are detected beforehand and stored in a memory. A second amplification correction section corrects the amplitude of a second output signal V2 on the basis of the estimated value of rotor angle and the maximum and minimum values of the second output signal V2 for each magnetic pole pair that are detected beforehand and stored in a memory. A rotational angle calculation section calculates a rotor angle on the basis of the corrected first output signal V1' and the corrected second output signal V2'.
Publication patent application JP 2016 080547 relates to a position controller for preventing processing failure by a control unit even when the speed is increased during precisely detecting the position by multiplying an encoder signal for position detection.
Publication patent application JP 2018 055096 relates to an imaging apparatus having a damping function capable of reducing an image blur due to vibrations.
Publication patent application JP 2009 036760 relates to detecting an origin position even when the detection accuracy of an origin detection sensor varies.
Patent JP 5 332767 B2 relates to a method and device for detecting an origin position even when a tilt photointerrupter for detecting the origin in a tilt direction is affected by external light, and to a monitoring camera device.

### SUMMARY OF THE INVENTION

In the position detection device, for example, when a magnetization state of the magnetized portion of the motor varies, there is a problem that the position of the motor in the rotation direction cannot be detected with high accuracy.

Therefore, an object of the present disclosure is to provide a position detection device and the like that can detect a position of a motor in a rotation direction with high accuracy.

A position detection device according to one aspect of the present disclosure includes a motor that rotates a drive target, a periodic sensor that detects a periodic change generated by the rotation of the motor to output a waveform signal having a plurality of periods, and a controller that controls the rotation of the motor. The controller obtains a rotation angle reference line indicating a change in a cumulative rotation angle of the motor based on the waveform signal output from the periodic sensor, and corrects the waveform signal based on a partial waveform signal which is a part of the waveform signal and the rotation angle reference line.

An imaging device according to one aspect of the present disclosure includes the above position detection device and the drive target including a camera.

In accordance with the position detection device and the like according to one aspect of the present disclosure, the position of the motor in the rotation direction can be detected with high accuracy.

### BRIEF DESCRIPTION OF THE DRAWINGS

Fig. 1 is a diagram of an imaging device including a position detection device according to an exemplary embodiment as viewed from the front.
Fig. 2 is a schematic view of a motor included in the position detection device according to the exemplary embodiment.
Fig. 3 is a block configuration diagram of the position detection device according to the exemplary embodiment.
Fig. 4 is a diagram illustrating a waveform signal input to a rotation angle calculator of the position detection device according to the exemplary embodiment, a count value, an intra-period rotation angle of the motor, and a cumulative rotation angle of the motor that are calculated by the rotation angle calculator.
Fig. 5 is a diagram schematically illustrating waveform signals before and after offset correction.
Fig. 6 is a diagram schematically illustrating waveform signals before intra-period correction to after the intra-period correction.
Fig. 7 is a flowchart illustrating an operation in a scene in which preparation for offset correction is performed.
Fig. 8 is a diagram illustrating kinds of processing executed by the position detection device when preparation for offset correction is performed.
Fig. 9 is a flowchart illustrating an operation in a scene in which preparation for intra-period correction is performed.
Fig. 10 is a diagram illustrating kinds of processing executed by the position detection device when preparation for intra-period correction is performed.
Fig. 11 is a flowchart illustrating an operation of the position detection device in a scene in which offset correction and intra-period correction are performed.
Fig. 12 is a diagram illustrating kinds of processing executed by the position detection device when offset correction and intra-period correction are performed.

### DESCRIPTION OF EMBODIMENT

Hereinafter, exemplary embodiments will be described with reference to the drawings. The exemplary embodiments and the like to be described below provide comprehensive or specific examples. Numerical values, shapes, materials, constituent elements, disposition positions and connection modes of the constituent elements, steps, order of the steps, and the like illustrated in the following exemplary embodiments and the like are merely examples, and therefore are not intended to limit the present disclosure. In addition, of constituent elements in the following exemplary embodiments and the like, constituent elements that are not recited in the independent claims will be described as optional constituent elements.

In addition, the drawings are schematic views and are not necessarily strictly illustrated. In addition, in the drawings, substantially the same configurations are designated by the same reference marks, and duplicate description may be omitted or simplified. In addition, even in a case where the same object is illustrated in the drawings, a scale may be changed for the sake of convenience.

In addition, in the present specification, terms indicating a relationship between elements, such as coincidence, equal, and parallel, terms indicating a shape of an element, such as plate-shape and rectangular shape, numerical values, and numerical ranges are not expressions representing only strict meanings, but are expressions meaning to include a substantially equivalent range, for example, a difference of about several %.

### (Exemplary embodiment)

### [Configuration of position detection device and imaging device]

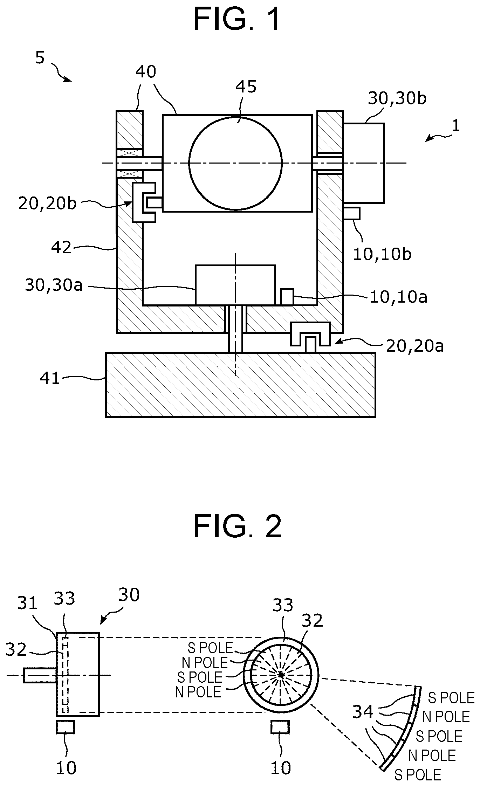

Configurations of a position detection device and an imaging device according to an exemplary embodiment will be described with reference to Figs. 1 to 6.

Fig. 1 is a diagram of imaging device 5 including position detection device 1 according to the exemplary embodiment as viewed from the front.

Imaging device 5 is, for example, a device that performs imaging by moving camera 45 in a pan direction and a tilt direction. For example, in a case where imaging device 5 is installed on a ceiling, the imaging device 5 is installed upside down illustrated in Fig. 1.

Imaging device 5 includes drive target 40 and position detection device 1.

Drive target 40 includes camera 45, first base 41 serving as a base, and second base 42 provided on first base 41. Camera 45 is, for example, a visible light camera, a near-infrared light camera, or a camera that can detect visible light and near-infrared light. First base 41 is fixed to a construction material such as a ceiling. Second base 42 includes a flat plate and two side plates vertically erected from the flat plate.

Position detection device 1 can rotate drive target 40 including camera 45 in the pan direction and the tilt direction. In addition, position detection device 1 can detect the position of camera 45 in the pan direction and the tilt direction.

Position detection device 1 includes a plurality of motors 30a and 30b, a plurality of periodic sensors 10a and 10b, a plurality of origin sensors 20a and 20b, and controller 50.

The plurality of motors 30a and 30b are, for example, stepping motors, and rotation angles are changed by control commands output from controller 50. Motor 30a is fixed to the flat plate of second base 42, and a rotation shaft of motor 30a is connected to first base 41 via a shaft member extending in a vertical direction. Motor 30b is fixed to one side plate of second base 42, and a rotation shaft of motor 30b is connected to camera 45 via a shaft member extending in a horizontal direction. Position detection device 1 employs a direct drive structure in which drive target 40 or camera 45 is directly rotated by motors 30a and 30b.

For example, second base 42 and camera 45 are rotated in the pan direction with first base 41 as a base by rotating motor 30a, and camera 45 can be rotated in the tilt direction with second base 42 as a base by rotating motor 30b. For example, a movable range of motor 30a is 360°, and a movable range of motor 30b is 90°.

Hereinafter, both or one of motors 30a and 30b may be referred to as motor 30. In addition, both or one of periodic sensors 10a and 10b may be referred to as periodic sensor 10, and both or one of origin sensors 20a and 20b may be referred to as origin sensor 20.

Fig. 2 is a schematic view of motor 30 and periodic sensor 10 included in position detection device 1.

Motor 30 includes motor body 31 and sensor magnet 33 connected to the rotation shaft of motor 30.

Motor body 31 includes a coil (not illustrated) to which a current is supplied by pulse width modulation, and drive magnet 32 connected to a rotation shaft of motor 30. Drive magnet 32 has a plurality of magnetic poles arranged along a rotation direction of motor 30. The plurality of magnetic poles are magnetized such that s poles and n poles are alternately arranged along the rotation direction. The number of magnetic poles of drive magnet 32 is, for example, 16.

Sensor magnet 33 has a plurality of magnetic poles 34 arranged along a rotation direction of motor 30. The plurality of magnetic poles 34 of sensor magnet 33 are provided near an outer periphery of drive magnet 32. The plurality of magnetic poles 34 are magnetized such that S poles and N poles are alternately arranged along the rotation direction. The number of magnetic poles 34 of sensor magnet 33 is, for example, 432. The plurality of magnetic poles 34 rotationally move with the rotation of motor 30. The plurality of magnetic poles 34 rotationally move, and thus, changes in magnetic field are generated in motor body 31 and near motor body 31.

Periodic sensor 10 is disposed near sensor magnet 33 and detects a plurality of periods included in a periodic change generated by the rotation of motor 30. Periodic sensor 10 is, for example, a magneto resistance (MR) sensor, and detects a plurality of periods by detecting changes in magnetic field generated by rotational movement of the plurality of magnetic poles 34. The above periods included in the periodic change are in one-to-one correspondence with magnetization periods of the plurality of magnetic poles 34 arranged along the rotation direction of motor 30.

For example, periodic sensor 10a that detects the rotation of motor 30a in the pan direction is fixed to the flat plate of second base 42, and periodic sensor 10b that detects the rotation of motor 30b in the tilt direction is fixed to the side plate of second base 42. Each of periodic sensors 10a and 10b detects a plurality of periods in a movable range of each of motors 30a and 30b. For example, periodic sensor 10a detects 432 periods while motor 30a rotates 360°. For example, periodic sensor 10b detects 108 periods while motor 30b rotates by 90°. Each of periodic sensors 10a and 10b outputs waveform signal s1 including a plurality of periods to controller 50.

Origin sensor 20 detects an origin of motor 30 in the rotation direction. Origin sensor 20 is, for example, a transmissive photoelectric sensor, and includes a photo-interrupter and a shielding member that shields light projected and received by the photo-interrupter. For example, the photo-interrupter of origin sensor 20a that detects an origin of motor 30a in the pan direction is fixed to the flat plate of second base 42, and the shielding member is fixed to first base 41. In addition, the photo-interrupter of origin sensor 20b that detects an origin of motor 30b in the tilt direction is fixed to the side plate of second base 42, and the shielding member is fixed to camera 45.

Each of origin sensors 20a and 20b detects the origin once in the movable range of each of motors 30a and 30b. For example, origin sensor 20a detects the origin once while drive target 40 including camera 45 rotates by 360°. For example, origin sensor 20b detects the origin once while camera 45 rotates by 90°. Each of origin sensors 20a and 20b outputs an origin detection signal s2 indicating that the origin is detected to controller 50.

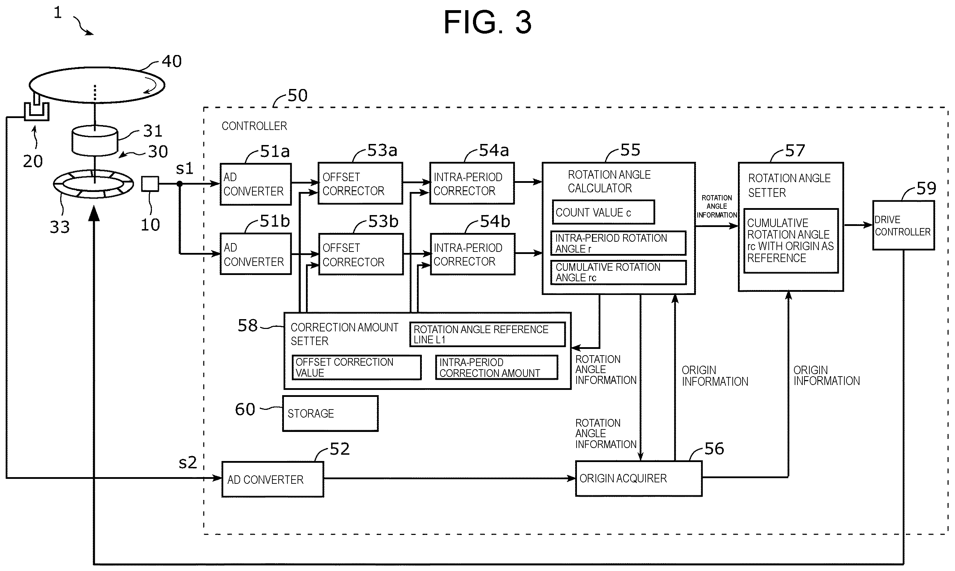

Fig. 3 is a block configuration diagram of position detection device 1. In the drawing, drive target 40 and magnetic poles 34 of sensor magnet 33 are illustrated in a simplified manner. Here, although motor 30 rotating in the pan direction will be described as an example, the same applies to motor 30 rotating in the tilt direction.

As illustrated in Fig. 3, position detection device 1 includes motor 30, periodic sensor 10, origin sensor 20, and controller 50. Motor 30, periodic sensor 10, and origin sensor 20 are as described above.

Controller 50 includes AD converters 51a, 51b, and 52, offset correctors 53a and 53b, intra-period correctors 54a and 54b, rotation angle calculator 55, origin acquirer 56, rotation angle setter 57, correction amount setter 58, drive controller 59, and storage 60. Controller 50 includes a processor such as a central processing unit (CPU), storage 60 including a volatile memory and a nonvolatile memory, and a program stored in storage 60. A functional block configuration of controller 50 is realized by executing the program.

Each of AD converters 51a and 51b acquires waveform signal s1 output from periodic sensor 10, performs AD conversion, and outputs the waveform signal s1 to offset correctors 53a and 53b.

Offset correctors 53a and 53b perform offset correction of waveform signals s1 output from AD converters 51a and 51b in an amplitude direction, and outputs the waveform signals s1 to intra-period correctors 54a and 54b.

Intra-period correctors 54a and 54b perform intra-period correction on waveform signals s1 output from offset correctors 53a and 53b, and outputs the waveform signals s1 to rotation angle calculator 55.

In offset correctors 53a and 53b and intra-period correctors 54a and 54b, a correction amount in an initial state is set to 0. Offset correctors 53a and 53b and intra-period correctors 54a and 54b will be described in detail later.

Rotation angle calculator 55 calculates count value c, intra-period rotation angle r of the motor, and cumulative rotation angle rc of the motor based on waveform signals s1 output from intra-period correctors 54a and 54b.

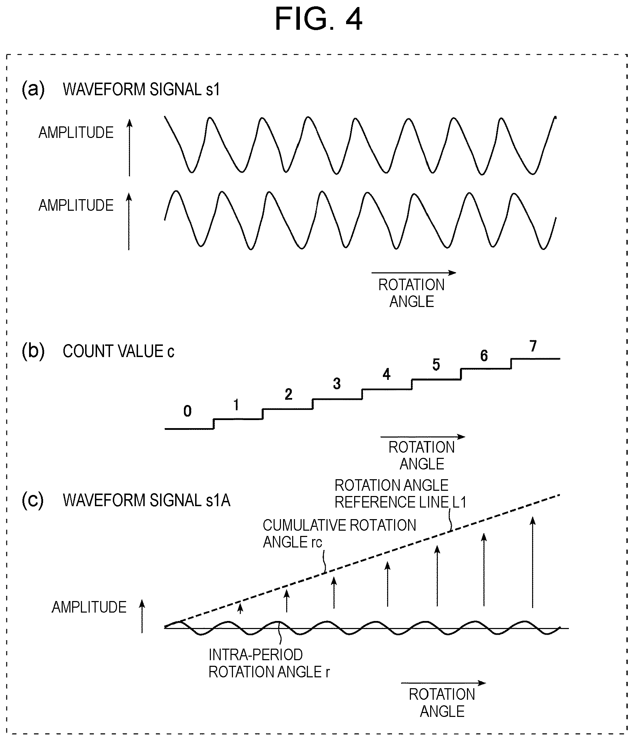

Fig. 4 is a diagram illustrating waveform signal s1 input to rotation angle calculator 55 of position detection device 1, count value c, intra-period rotation angle r of motor 30, and cumulative rotation angle rc of motor 30 that are calculated by rotation angle calculator 55. Note that, for easy understanding, waveform signal s1, count value c, intra-period rotation angle r, and cumulative rotation angle rc are expressed as analog data in Fig. 4.

A horizontal axis in Fig. 4 represents a rotation angle of motor 30 in a case where motor 30 is rotated from one end to the other end in the movable range of motor 30.

As illustrated in part (a) of Fig. 4, waveform signals s1 having two phases different by 90° are input to rotation angle calculator 55. Each of waveform signals s1 having two phases is a sinusoidal signal, and an amplitude on a vertical axis corresponds to an output voltage of periodic sensor 10.

Part (b) of Fig. 4 illustrates count value c obtained by integrating periods included in waveform signal s1 having one phase out of waveform signals s1 having two phases. For example, in a case where waveform signal s1 when motor 30 is rotated by 360° has 432 periods, since one period is about 0.83°, count value c is counted up whenever motor 30 is rotated by about 0.83°.

Part (c) of Fig. 4 illustrates sinusoidal waveform signal s1A calculated and generated based on waveform signals s1 having two phases. Waveform signal s1A is generated by performing arctangent calculation on waveform signal s1. Waveform signal s1A has the same period as waveform signal s1 having one phase out of waveform signals s1 having two phases, and an amplitude changes in proportion to the rotation angle of motor 30.

Rotation angle calculator 55 illustrated in Fig. 3 reads sinusoidal waveform signal s1A to acquire the rotation angle of motor 30 within the period, that is, intra-period rotation angle r. In addition, rotation angle calculator 55 acquires cumulative rotation angle rc of motor 30 (see part (c) of Fig. 4) by accumulating intra-period rotation angles r of the periods. Rotation angle calculator 55 outputs rotation angle information including count value c, intra-period rotation angle r of motor 30, and cumulative rotation angle rc to origin acquirer 56, rotation angle setter 57, and correction amount setter 58. The rotation angle information is used when the origin of motor 30 is acquired, when the rotation angle of motor 30 is set, and when waveform signal s1 is corrected.

In addition, rotation angle calculator 55 obtains rotation angle reference line L1 indicating a change in cumulative rotation angle rc of motor 30 based on waveform signal s1A. For example, rotation angle calculator 55 derives rotation angle reference line L1 from a cumulative value of the rotation angles (that is, intra-period rotation angles r) of motor 30 corresponding to the periods of the plurality of periods detected by periodic sensor 10 while motor 30 rotates by a predetermined angle. Rotation angle reference line L1 calculated by rotation angle calculator 55 is output to correction amount setter 58.

Correction amount setter 58 stores rotation angle reference line L1 output from rotation angle calculator 55. In addition, correction amount setter 58 sets and stores an intra-period correction amount to be described later based on rotation angle reference line L1.

AD converter 52 illustrated in Fig. 3 acquires origin detection signal s2 output from origin sensor 20 and performs AD conversion. AD converter 52 outputs AD-converted origin detection signal s2 to origin acquirer 56.

Origin acquirer 56 acquires the position of the origin based on origin detection signal s2 and the rotation angle information output from rotation angle calculator 55. Specifically, origin acquirer 56 acquires count value c when origin sensor 20 detects the origin and intra-period rotation angle r of motor 30 from rotation angle calculator 55, and specifies the position of the origin. Origin information including the position of the origin specified by origin acquirer 56 is output to rotation angle calculator 55 and rotation angle setter 57.

Rotation angle setter 57 sets cumulative rotation angle rc of motor 30 with the origin as a reference based on the origin information output from origin acquirer 56 and the rotation angle information output from rotation angle calculator 55, and outputs the cumulative rotation angle rc to drive controller 59. Drive controller 59 controls the rotation of motor 30 based on the signal output from rotation angle setter 57.

As described above, in the position detection device, when there is a variation in a magnetization state of a magnetized portion of the motor, there is a problem that the position in the rotation direction cannot be detected with high accuracy. For example, in a case where the magnetic sensor is used as the periodic sensor that detects the rotation direction, when the drive magnet and the plurality of magnetic poles provided in the sensor magnet magnetically interfere with each other or when there is a variation in magnetization accuracy of the plurality of magnetic poles after manufacture, a waveform signal output from the periodic sensor is deviated. Thus, the position of the motor in the rotation direction cannot be detected with high accuracy. Position detection device 1 of the present exemplary embodiment has the following configuration, and thus, the position of motor 30 in the rotation direction can be detected with high accuracy.

In position detection device 1 of the present exemplary embodiment, in order to detect the position of motor 30 in the rotation direction with high accuracy, offset correction by offset correctors 53a and 53b and intra-period correction by intra-period correctors 54a and 54b are executed.

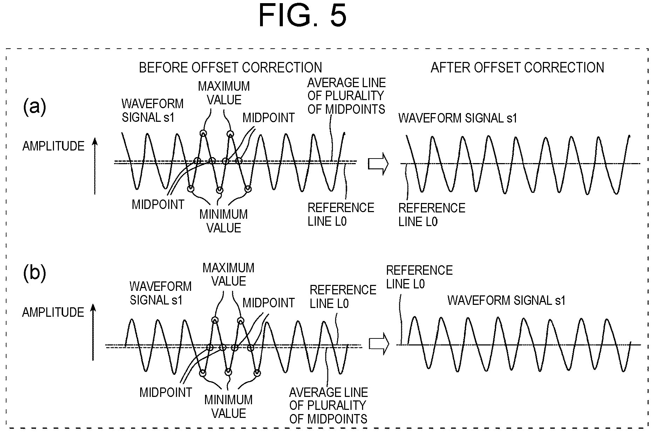

Fig. 5 is a diagram schematically illustrating waveform signals s1 before offset correction and after offset correction. The offset correction is correction for moving entire waveform signal s1 in the amplitude direction. Part (a) of Fig. 5 illustrates an example in which entire waveform signal s1 is translated toward reference line L0 since waveform signal s1 is positioned on a plus side in the amplitude direction. Part (b) of Fig. 5 illustrates an example in which entire waveform signal s1 is translated toward reference line L0 since waveform signal s1 is positioned on a minus side in the amplitude direction.

For example, offset correctors 53a and 53b acquire a plurality of midpoints from a plurality of maximum values and minimum values of waveform signal s1, and set, as an offset correction value, a difference between an average line of the plurality of midpoints and reference line L0. Then, offset correctors 53a and 53b translate entire waveform signal s1 toward reference line L0 based on the set offset correction value. This offset correction is individually executed for waveform signals s1 having two phases. Waveform signal s1 corrected by offset corrector 53a is output to intra-period corrector 54a, and waveform signal s1 corrected by offset corrector 53b is output to intra-period corrector 54b.

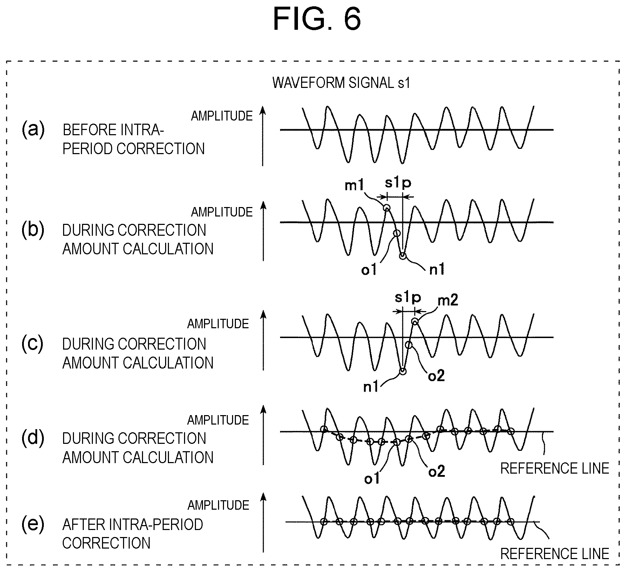

Fig. 6 is a diagram schematically illustrating waveform signals s1 before intra-period correction to after intra-period correction. The intra-period correction is correction for correcting deviation of waveform signal s1 caused by magnetization variation or the like. A correction amount of the intra-period correction is calculated and set by correction amount setter 58.

Correction amount setter 58 sets partial waveform signal s1p that is a part of waveform signal s1. A plurality of partial waveform signals s1p are set to correspond to a plurality of periods included in waveform signal s1. For example, partial waveform signal s1p may be a waveform signal corresponding to 1/2 periods among the plurality of periods, may be a waveform signal corresponding to one period, or may be a waveform signal corresponding to two periods. Hereinafter, a case where partial waveform signal s1p is a waveform signal corresponding to a 1/2 period will be described as an example.

Correction amount setter 58 sets the intra-period correction amount for each of the plurality of partial waveform signals s1p. For example, correction amount setter 58 obtains maximum value m and minimum value n of an amplitude of partial waveform signal s1p, and intermediate value o between maximum value m and minimum value n.

Part (a) of Fig. 6 illustrates waveform signal s1 before intra-period correction. Part (b) of Fig. 6 illustrates maximum value m1, minimum value n1, and intermediate value o1 of partial waveform signal s1p. Intermediate value o1 in this case is obtained by ol = (m1 + n1)/2. Part (c) of Fig. 6 illustrates minimum value n1, maximum value m2, and intermediate value o2 of partial waveform signal s1p adjacent to partial waveform signal s1p in part (b) of Fig. 6. Intermediate value o2 in this case is obtained by o2 = (n1 + m2)/2. In part (d) of Fig. 6, a curve connecting the plurality of intermediate values o1, o2, ... is indicated by a broken line. In this example, since the magnetization state varies, the curve connecting the plurality of intermediate values o1, o2, ... is a distorted curve.

As illustrated in part (e) of Fig. 6, correction amount setter 58 sets, as a correction amount, a difference between rotation angle reference line L1 and the plurality of intermediate values o1, o2, ..., and corrects each cumulative rotation angle rc of motor 30 on partial waveform signal s1p at each of intermediate values o1, o2, ... to approach rotation angle reference line L1. In addition, correction amount setter 58 interpolates between the correction amount and the correction amount in accordance with the transition of rotation angle reference line L1. The intra-period correction amount set by correction amount setter 58 is output to intra-period correctors 54a and 54b.

Intra-period correctors 54a and 54b correct waveform signal s1 based on the intra-period correction amount set by correction amount setter 58. This intra-period correction is individually executed for waveform signals s1 having two phases. Waveform signal s1 corrected by intra-period corrector 54a is output to rotation angle calculator 55, and waveform signal s1 corrected by intra-period corrector 54b is output to rotation angle calculator 55.

Rotation angle calculator 55 generates waveform signal s1A from waveform signal s1 after correction, and acquires count value c, intra-period rotation angle r, and cumulative rotation angle rc of motor 30. Rotation angle calculator 55 outputs the rotation angle information including count value c, intra-period rotation angle r, and cumulative rotation angle rc to rotation angle setter 57.

Rotation angle setter 57 sets cumulative rotation angle rc of motor 30 with the origin as a reference based on the origin information output from origin acquirer 56 and the rotation angle information output from rotation angle calculator 55, and outputs the cumulative rotation angle rc to drive controller 59. Drive controller 59 controls the rotation of motor 30 based on the signal output from rotation angle setter 57.

As described above, controller 50 obtains rotation angle reference line L1 indicating a change in cumulative rotation angle rc of motor 30 based on waveform signal s1 output from periodic sensor 10, and corrects waveform signal s1 based on the partial waveform signal s1p that is a part of waveform signal s1 and rotation angle reference line L1. In accordance with position detection device 1, the position of motor 30 in the rotation direction can be detected with high accuracy.

### [Operation of position detection device]

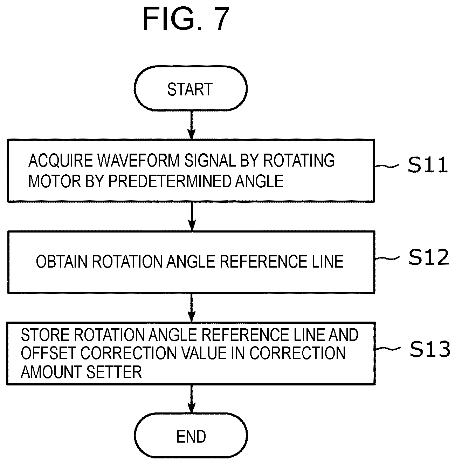

An operation of position detection device 1 will be described with reference to Figs. 7 to 12. In this example, the description will be divided into a scene in which preparation for offset correction is performed, a scene in which preparation for intra-period correction is performed, and a scene in which position detection device 1 is actually activated by performing offset correction and intra-period correction. Note that, here, although motor 30 rotating in the pan direction will be described as an example, the same applies to motor 30 rotating in the tilt direction.

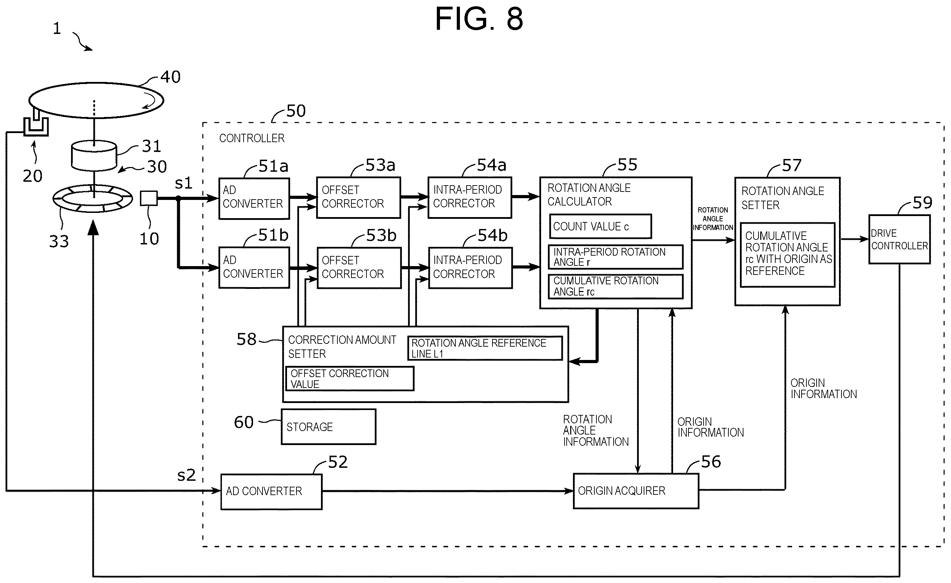

Fig. 7 is a flowchart illustrating an operation in a scene in which preparation for offset correction is performed. Fig. 8 is a diagram illustrating kinds of processing executed by position detection device 1 when preparation for offset correction is performed. At this stage, the correction amounts of the offset correction and the intra-period correction are not set.

Controller 50 rotates motor 30 by a predetermined angle to acquire waveform signal s1 output from periodic sensor 10 (step S11). The predetermined angle is a rotation movable range of motor 30, and is, for example, 360° in the pan direction and 90° in the tilt direction. Note that, the predetermined angle is not limited to the rotation movable range of motor 30, and may be a part of the rotation movable range as long as the rotation movable range includes a plurality of periods.

Controller 50 obtains rotation angle reference line L1 indicating the change in cumulative rotation angle rc of motor 30 based on waveform signal s1 (step S12). For example, controller 50 derives rotation angle reference line L1 from the cumulative value of the rotation angles of motor 30 corresponding to the periods of the plurality of periods detected by periodic sensor 10. In addition, controller 50 acquires a plurality of midpoints from a plurality of maximum values and minimum values of waveform signal s1, obtains reference line L0 from an average value of the plurality of midpoints, and determines an offset correction value.

Controller 50 stores rotation angle reference line L1 and the offset correction value in correction amount setter 58 (step S13).

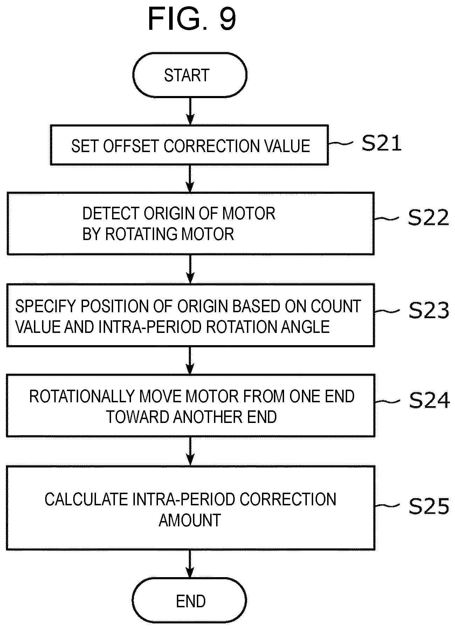

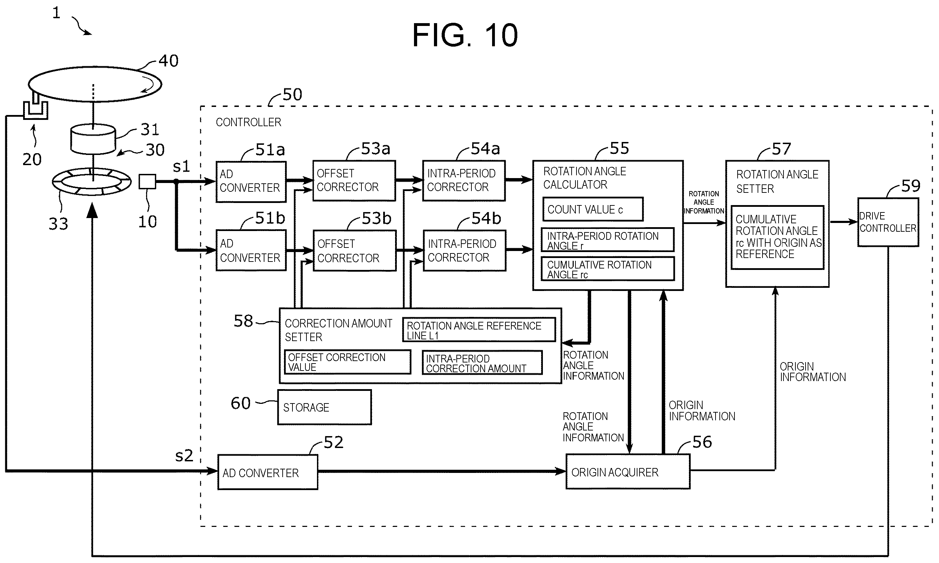

Fig. 9 is a flowchart illustrating an operation in a scene in which preparation for intra-period correction is performed. Fig. 10 is a diagram illustrating kinds of processing executed by position detection device 1 when intra-period correction is performed. At this stage, the correction amounts of the offset correction and the intra-period correction are also not set.

First, controller 50 sets the offset correction value stored in correction amount setter 58 (step S21).

Subsequently, controller 50 rotates motor 30 until the origin of motor 30 is detected. Origin sensor 20 detects the origin of motor 30 by the rotation of motor 30 (step S22). Origin sensor 20 outputs origin detection signal s2 to origin acquirer 56. In addition, periodic sensor 10 outputs waveform signal s1 to rotation angle calculator 55 via offset correctors 53a and 53b and intra-period correctors 54a and 54b.

Origin acquirer 56 acquires count value c and intra-period rotation angle r when origin sensor 20 detects the origin from rotation angle calculator 55. Origin acquirer 56 specifies the position of the origin based on acquired count value c and intra-period rotation angle r (step S23).

Subsequently, controller 50 rotationally moves motor 30 from one end toward the other end (step S24). As a result, controller 50 acquires variations in the magnetization state while motor 30 rotates from one end to the other end.

Controller 50 calculates each correction amount for performing the intra-period correction based on each partial waveform signal s1p included in waveform signal s1 and rotation angle reference line L1 (step S25). As a result, the intra-period correction amount is stored in correction amount setter 58. As a result, the preparation for the intra-period correction is ended.

Subsequently, kinds of normal processing when position detection device 1 is operated will be described.

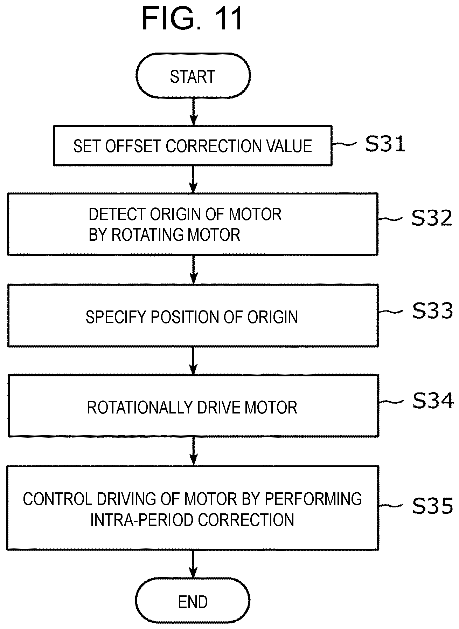

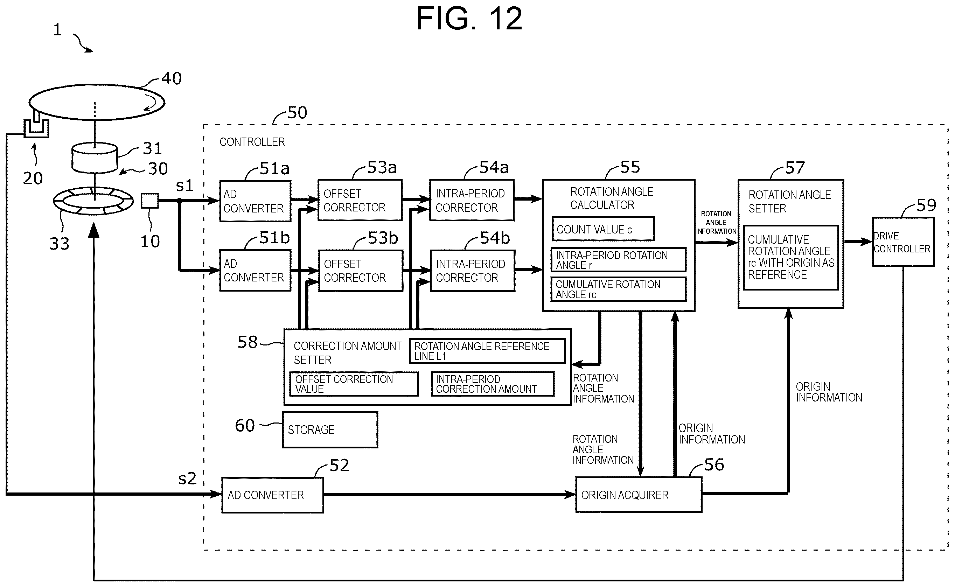

Fig. 11 is a flowchart illustrating an operation of position detection device 1 in a scene in which offset correction and intra-period correction are performed. Fig. 12 is a diagram illustrating kinds of processing executed by position detection device 1 when offset correction and intra-period correction are performed.

First, controller 50 sets the offset correction value stored in correction amount setter 58 (step S31).

Subsequently, controller 50 rotates motor 30 until the origin of motor 30 is detected. Origin sensor 20 detects the origin of motor 30 by the rotation of motor 30 (step S32). Origin sensor 20 outputs origin detection signal s2 to origin acquirer 56. In addition, periodic sensor 10 outputs waveform signal s1 to rotation angle calculator 55 via offset correctors 53a and 53b and intra-period correctors 54a and 54b.

Origin acquirer 56 acquires count value c and intra-period rotation angle r when origin sensor 20 detects the origin from rotation angle calculator 55. Origin acquirer 56 specifies the position of the origin based on acquired count value c and intra-period rotation angle r (step S33).

Subsequently, controller 50 actually rotationally drives motor 30. At this time, controller 50 controls the driving of the motor by performing intra-period correction in accordance with the rotation of motor 30. (Step S34) specifically, controller 50 reads the intra-period correction amount corresponding to the rotation angle of motor 30 from correction amount setter 58, and corrects waveform signal s1. Controller 50 controls the rotation of motor 30 based on waveform signal s1 after correction. Steps S11 to S34 are executed, and thus, the position of motor 30 in the rotation direction can be detected with high accuracy.

### (Conclusion)

As described above, position detection device 1 according to the present exemplary embodiment includes motor 30 that rotates drive target 40, periodic sensor 10 that detects a periodic change generated by the rotation of motor 30 to output waveform signal s1 having a plurality of periods, and controller 50 that controls the rotation of motor 30. Controller 50 obtains rotation angle reference line L1 indicating a change in cumulative rotation angle rc of motor 30 based on waveform signal s1 output from periodic sensor 10, and corrects waveform signal s1 based on partial waveform signal s1p which is a part of waveform signal s1 and rotation angle reference line L1.

Accordingly, partial waveform signal s1p included in waveform signal s1 can be corrected in accordance with rotation angle reference line L1 indicating the change in cumulative rotation angle rc of motor 30. In accordance with position detection device 1, the position of motor 30 in the rotation direction can be detected with high accuracy.

In addition, motor 30 may have a plurality of magnetic poles 34 arranged along a rotation direction of motor 30, the plurality of magnetic poles 34 may rotationally move with the rotation of motor 30, and periodic sensor 10 may detect the periodic change by detecting changes in magnetic field generated by the rotational movement of the plurality of magnetic poles 34.

As described above, periodic sensor 10 detects the plurality of periods due to the changes in magnetic field, and thus, partial waveform signal s1p included in waveform signal s1 can be accurately acquired. Thus, partial waveform signal s1p can be accurately corrected in accordance with rotation angle reference line L1. In accordance with position detection device 1, the position of motor 30 in the rotation direction can be detected with high accuracy. In addition, the position of motor 30 in the rotation direction can be detected with high accuracy, and thus, it is possible to suppress the occurrence of speed unevenness in the rotation direction of motor 30.

In addition, controller 50 may set a plurality of partial waveform signals s1p in association with the plurality of periods included in waveform signal s1, and may correct waveform signal s1 based on the plurality of partial waveform signals s1p and rotation angle reference line L1.

Accordingly, the plurality of partial waveform signals s1p can be corrected in accordance with rotation angle reference line L1. In accordance with position detection device 1, the position of motor 30 in the rotation direction can be detected with high accuracy.

In addition, controller 50 may obtain maximum value m and minimum value n of an amplitude of partial waveform signal s1p, and intermediate value o between maximum value m and minimum value n, and correct waveform signal s1 such that cumulative rotation angle rc of motor 30 on partial waveform signal s1p at intermediate value o approaches rotation angle reference line L1.

Accordingly, partial waveform signal s1p can be corrected in accordance with rotation angle reference line L1 by using intermediate value o between maximum value m and minimum value n. In accordance with position detection device 1, the position of motor 30 in the rotation direction can be detected with high accuracy.

In addition, controller 50 may derive rotation angle reference line L1 from a cumulative value of a rotation angle of motor 30 corresponding to each of the plurality of periods detected by periodic sensor 10 while motor 30 rotates by a predetermined angle.

Accordingly, rotation angle reference line L1 can be accurately derived. Thus, partial waveform signal s1p included in waveform signal s1 can be accurately corrected in accordance with rotation angle reference line L1. In accordance with position detection device 1, the position of motor 30 in the rotation direction can be detected with high accuracy.

In addition, imaging device 5 according to the present exemplary embodiment includes position detection device 1 and drive target 40 including camera 45.

Accordingly, it is possible to provide imaging device 5 including position detection device 1 that can detect the position of motor 30 in the rotation direction with high accuracy.

### (Other exemplary embodiments)

Although the exemplary embodiment has been described above, the present disclosure is not limited to the exemplary embodiment.

Periodic sensor 10 of the above exemplary embodiment is not limited to a magnetic sensor. For example, the periodic sensor may be a sensor that detects a periodic change, and may be an optical sensor. Origin sensor 20 of the above exemplary embodiment is not limited to the transmissive photoelectric sensor. For example, the origin sensor may be a sensor that can detect the origin of motor 30, and may be a reflective photoelectric sensor, a magnetic sensor, or a mechanical switch sensor.

In the above exemplary embodiment, although it has been described that the offset correction is executed before the intra-period correction is performed, the offset correction is not necessarily executed. For example, in a case where the deviation of waveform signal s1 in the amplitude direction is smaller than a predetermined threshold value, controller 50 may not execute the offset correction. In addition, controller 50 may execute the intra-period correction on waveform signal s1 in a state where the offset correction is not performed.

In the above exemplary embodiment, although it has been described that, when the intra-period correction is performed, controller 50 performs interpolation processing by using intermediate value o, the present invention is not limited thereto. For example, controller 50 may perform correction by using a center line of waveform signal s1. Specifically, controller 50 may obtain a center line in which an area surrounded by a center line and a curve on a plus side of waveform signal s1 is equal to an area surrounded by a center line and a curve on a minus side of waveform signal s1, and may correct waveform signal s1 such that a rotation angle when the center line intersects waveform signal s1 approaches rotation angle reference line L1.

In addition, in position detection device 1 of the above exemplary embodiment, the following position detection method may be executed. That is, the position detection method is a position detection method of a position detection device that includes motor 30 that rotates drive target 40, periodic sensor 10 that detects a periodic change generated by the rotation of motor 30 and outputs waveform signal s1 having a plurality of periods, and controller 50 that controls the rotation of motor 30. The position detection method may include a step of obtaining rotation angle reference line L1 indicating a change in cumulative rotation angle rc of motor 30 based on waveform signal s1 output from periodic sensor 10, and a step of correcting waveform signal s1 based on partial waveform signal s1p included in waveform signal s1 and rotation angle reference line L1.

General or specific aspects of the present disclosure may be realized by a system, a device, a method, an integrated circuit, a computer program, or a computer-readable recording medium such as a CD-ROM. In addition, such aspects may also be realized by any combinations of a system, a device, a method, an integrated circuit, a computer program, and a recording medium.

In addition, the order of the kinds of processing described in the flowchart of the above exemplary embodiment and the like is an example. The order of the plurality of kinds of processing may be changed, or the plurality of kinds of processing may be executed in parallel.

In addition, the division of the functional blocks in the block diagram is only by way of example, and a plurality of functional blocks may be realized as one functional block, one functional block may be divided into a plurality of functional blocks, or a part of the functions may be transferred to another functional block. In addition, functions of a plurality of functional blocks that have similar functions may be processed in parallel or in a time-sharing manner by a single piece of hardware or software.

In addition, in the above exemplary embodiment and the like, each constituent element (for example, processor such as the controller) may be dedicated hardware, or may be realized by executing a software program suitable for each constituent element. A program execution unit such as a central processing unit (CPU) or a processor reads and executes a software program stored in a recording medium such as a hard disk and a semiconductor memory, and thus, each constituent element may be realized. In addition, for example, each constituent element may be a circuit (or an integrated circuit). These circuits may constitute one circuit as a whole or may be separate circuits. In addition, each of these circuits may be a general-purpose circuit or a dedicated circuit.

In addition, the present disclosure includes other exemplary embodiments obtained by making various modifications conceived by those skilled in the art to the above exemplary embodiment and the like, or other exemplary embodiments realized by any combination of the constituent elements and functions in each exemplary embodiment without departing from the scope of the invention whereas the invention is solely defined by the appended claims.

### INDUSTRIAL APPLICABILITY

The position detection device and the like of the present disclosure can be used for a monitoring camera device and the like.

### REFERENCE MARKS IN THE DRAWINGS

1: position detection device
5: imaging device
10, 10a, 10b: periodic sensor
20, 20a, 20b: origin sensor
30, 30a, 30b: motor
31: motor body
32: drive magnet
33: sensor magnet
34: magnetic pole
40: drive target
41: first base
42: second base
45: camera
50: controller
51a, 51b: AD converter
52: AD converter
53a, 53b: offset corrector
54a, 54b: Intra-period corrector
55: rotation angle calculator
56: origin acquirer
57: rotation angle setter
59: drive controller
60: storage
c: count value
L0: reference line
L1: rotation angle reference line
m, m1, m2: maximum value
n, n1: minimum value
o, o1, 02: intermediate value
r: intra-period rotation angle
rc: cumulative rotation angle
s1, s1A: waveform signal
s1p: partial waveform signal
s2: origin detection signal

## Claims

1. A position detection device comprising:
a motor (30; 30a, 30b) that rotates a drive target (40);
a periodic sensor (10; 10a, 10b) that detects a periodic change generated by the rotation of the motor (30; 30a, 30b) to output a waveform signal having a plurality of periods; and
a controller (50) that controls the rotation of the motor (30; 30a, 30b),
**characterized in that**
the controller (50) obtains a rotation angle reference line (L1) indicating a change in a cumulative rotation angle (rc) of the motor (30; 30a, 30b) based on the waveform signal output from the periodic sensor (10), and corrects the waveform signal based on a partial waveform signal which is a part of the waveform signal and the rotation angle reference line,
wherein the controller (50) derives the rotation angle reference line (L1) from a cumulative value of a rotation angle of the motor (30; 30a, 30b) corresponding to each of the plurality of periods detected by the periodic sensor (10) while the motor (30; 30a, 30b) rotates by a predetermined angle.

2. The position detection device according to Claim 1, wherein
the motor (30; 30a, 30b) has a plurality of magnetic poles (34) arranged along a rotation direction of the motor (30; 30a, 30b),
the plurality of magnetic poles (34) perform rotational movement with the rotation of the motor (30; 30a, 30b), and
the periodic sensor (10; 10a, 10b) detects the periodic change by detecting changes in magnetic field generated by the rotational movement of the plurality of magnetic poles (34).

3. The position detection device according to Claim 1 or 2, wherein the controller (50) sets a plurality of partial waveform signals in association with the plurality of periods included in the waveform signal, and corrects the waveform signal based on the plurality of partial waveform signals and the rotation angle reference line (L1).

4. The position detection device according to any one of Claims 1 to 3, wherein the controller (50) obtains a maximum value and a minimum value of an amplitude of the partial waveform signal, and an intermediate value between the maximum value and the minimum value, and corrects the waveform signal, so that the cumulative rotation angle of the motor on the partial waveform signal at the intermediate value approaches the rotation angle reference line (L1).

5. An imaging device comprising:
the position detection device (1) according to any one of Claims 1 to 4; and
the drive target (40) including a camera (45).

## Patentansprüche

1. Positionserkennungsvorrichtung, umfassend:
einen Motor (30; 30a, 30b), der ein Antriebsobjekt (40) dreht;
einen Periodensensor (10; 10a, 10b), der eine durch die Drehung des Motors (30; 30a, 30b) erzeugte periodische Änderung erfasst, um ein Wellenformsignal mit einer Vielzahl von Perioden auszugeben; und
eine Steuerung (50), die die Drehung des Motors (30; 30a, 30b) steuert,
**dadurch gekennzeichnet, dass**
die Steuerung (50) eine Drehwinkelreferenzlinie (L1) erhält, die eine Änderung eines kumulativen Drehwinkels (rc) des Motors (30; 30a, 30b) basierend auf dem von dem Periodensensor (10) ausgegebenen Wellenformsignal angibt, und das Wellenformsignal basierend auf einem Teilwellenformsignal, das ein Teil des Wellenformsignals ist, und der Drehwinkelreferenzlinie korrigiert,
wobei die Steuerung (50) die Drehwinkelreferenzlinie (L1) aus einem kumulativen Wert eines Drehwinkels des Motors (30; 30a, 30b) ableitet, der jeweils einer der Vielzahl von durch den Periodensensor (10) erfassten Perioden entspricht, während sich der Motor (30; 30a, 30b) um einen vorbestimmten Winkel dreht.

2. Positionserkennungsvorrichtung nach Anspruch 1, wobei
der Motor (30; 30a, 30b) eine Vielzahl von Magnetpolen (34) aufweist, die entlang einer Drehrichtung des Motors (30; 30a, 30b) angeordnet sind,
die Vielzahl von Magnetpolen (34) mit der Drehung des Motors (30; 30a, 30b) eine Drehbewegung ausführt, und
der Periodensensor (10; 10a, 10b) die periodische Änderung durch Erfassen von Änderungen eines Magnetfelds erfasst, die durch die Drehbewegung der Vielzahl von Magnetpolen (34) erzeugt werden.

3. Positionserkennungsvorrichtung nach Anspruch 1 oder 2, wobei die Steuerung (50) eine Vielzahl von Teilwellenformsignalen in Zuordnung zu der Vielzahl von in dem Wellenformsignal enthaltenen Perioden einstellt und das Wellenformsignal basierend auf der Vielzahl von Teilwellenformsignalen und der Drehwinkelreferenzlinie (L1) korrigiert.

4. Positionserkennungsvorrichtung nach einem der Ansprüche 1 bis 3, wobei die Steuerung (50) einen Maximalwert und einen Minimalwert einer Amplitude des Teilwellenformsignals sowie einen Zwischenwert zwischen dem Maximalwert und dem Minimalwert erhält und das Wellenformsignal derart korrigiert, dass sich der kumulative Drehwinkel des Motors auf dem Teilwellenformsignal bei dem Zwischenwert der Drehwinkelreferenzlinie (L1) annähert.

5. Bildgebungsvorrichtung, umfassend:
die Positionserkennungsvorrichtung (1) nach einem der Ansprüche 1 bis 4; und
das Antriebsobjekt (40), das eine Kamera (45) umfasst.

## Revendications

1. Dispositif de détection de position comprenant :
un moteur (30 ; 30a, 30b) qui fait tourner un élément entraîné (40) ;
un capteur périodique (10 ; 10a, 10b) qui détecte une variation périodique générée par la rotation du moteur (30 ; 30a, 30b) afin de délivrer un signal de forme d'onde présentant une pluralité de périodes ; et
un dispositif de commande (50) qui commande la rotation du moteur (30 ; 30a, 30b),
**caractérisé en ce que**
le dispositif de commande (50) obtient une ligne de référence d'angle de rotation (L1) indiquant une variation d'un angle de rotation cumulé (rc) du moteur (30 ; 30a, 30b) sur la base du signal de forme d'onde délivré par le capteur périodique (10), et corrige le signal de forme d'onde sur la base d'un signal partiel de forme d'onde qui constitue une partie du signal de forme d'onde et de la ligne de référence d'angle de rotation,
dans lequel le dispositif de commande (50) dérive la ligne de référence d'angle de rotation (L1) à partir d'une valeur cumulée d'un angle de rotation du moteur (30 ; 30a, 30b) correspondant à chacune de la pluralité de périodes détectées par le capteur périodique (10) pendant que le moteur (30 ; 30a, 30b) tourne d'un angle prédéterminé.

2. Dispositif de détection de position selon la revendication 1, dans lequel
le moteur (30 ; 30a, 30b) présente une pluralité de pôles magnétiques (34) agencés le long d'une direction de rotation du moteur (30 ; 30a, 30b),
la pluralité de pôles magnétiques (34) effectue un mouvement de rotation avec la rotation du moteur (30 ; 30a, 30b), et
le capteur périodique (10 ; 10a, 10b) détecte la variation périodique en détectant des variations d'un champ magnétique générées par le mouvement de rotation de la pluralité de pôles magnétiques (34).

3. Dispositif de détection de position selon la revendication 1 ou 2, dans lequel le dispositif de commande (50) définit une pluralité de signaux partiels de forme d'onde en association avec la pluralité de périodes comprises dans le signal de forme d'onde, et corrige le signal de forme d'onde sur la base de la pluralité de signaux partiels de forme d'onde et de la ligne de référence d'angle de rotation (L1).

4. Dispositif de détection de position selon l'une quelconque des revendications 1 à 3, dans lequel le dispositif de commande (50) obtient une valeur maximale et une valeur minimale d'une amplitude du signal partiel de forme d'onde, ainsi qu'une valeur intermédiaire entre la valeur maximale et la valeur minimale, et corrige le signal de forme d'onde de telle sorte que l'angle de rotation cumulé du moteur sur le signal partiel de forme d'onde à la valeur intermédiaire se rapproche de la ligne de référence d'angle de rotation (L1).

5. Dispositif d'imagerie comprenant :
le dispositif de détection de position (1) selon l'une quelconque des revendications 1 à 4 ; et
l'élément entraîné (40) comprenant une caméra (45).
